(19) **Europäisches Patentamt / European Patent Office / Office européen des brevets**

(11) **EP 3 066 534 B1**

(12) **FASCICULE DE BREVET EUROPEEN**

(45) Date de publication et mention
de la délivrance du brevet:
**17.02.2021 Bulletin 2021/07**

(51) Int Cl.:
**G05B 23/02** *(2006.01)*

(21) Numéro de dépôt: **14809455.0**

(22) Date de dépôt: **04.11.2014**

(86) Numéro de dépôt international:
**PCT/FR2014/052789**

(87) Numéro de publication internationale:
**WO 2015/067881 (14.05.2015 Gazette 2015/19)**

(54) **PROCEDE ET DISPOSITIF DE CARACTERISATION D'UN SIGNAL**

VERFAHREN UND VORRICHTUNG ZUM CHARAKTERISIEREN EINES SIGNALS

METHOD AND DEVICE FOR CHARACTERISING A SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.11.2013 FR 1360892**

(43) Date de publication de la demande:
**14.09.2016 Bulletin 2016/37**

(73) Titulaire: **Safran Aircraft Engines
75015 Paris (FR)**

(72) Inventeurs:
• **LEMAITRE, Alban**
**F-91200 Athis Mons (FR)**
• **LE GONIDEC, Serge**
**F-27200 Vernon (FR)**

(74) Mandataire: **Cabinet Beau de Loménie
158, rue de l'Université
75340 Paris Cedex 07 (FR)**

(56) Documents cités:
**DE-A1-102006 031 710    US-A- 5 459 675
US-B1- 6 199 422**

EP 3 066 534 B1

**Description**

L'invention concerne un procédé de caractérisation d'un signal, et plus particulièrement un procédé de détection de pannes utilisant la caractérisation d'un signal. L'invention concerne également des dispositifs pour la mise en œuvre de tels procédés.

Des procédés de détection de pannes sont connus. Dans une première étape A, on acquiert un signal, par exemple un signal issu d'un capteur. Ensuite, dans des étapes ultérieures, ce signal est analysé selon une méthode panne par panne, c'est-à-dire que chaque type de pannes est identifié un à un en fonction des caractéristiques particulières du signal. Par exemple, un signal plat sera associé à une coupure de câble, un signal saturé à une panne du capteur, etc. Ces procédés sont généralement lourds à implémenter en raison du nombre de pannes à envisager et de la complexité des opérations intermédiaires d'analyse.

Pour remédier à cet inconvénient, certains fabricants ont développé des procédés de détection de pannes optimisés pour leurs capteurs et systèmes. Cependant, cette solution n'est pas satisfaisante dans la mesure où elle dépend du capteur ou système informatique employé. Dans un système complexe, dans lequel coexistent plusieurs sous-systèmes de plusieurs fabricants, l'utilisation d'un procédé de détection de pannes différent pour chaque sous-système alourdit considérablement le contrôle du système dans son ensemble et s'avère handicapant lorsqu'il est nécessaire de remplacer un composant par un composant équivalent d'un autre fabricant.

En outre, au risque de détériorer les analyses ou d'induire un opérateur en erreur, il importe de ne pas détecter des pannes qui n'existent pas. Les fausses détections peuvent en effet avoir des conséquences désastreuses, par exemple lorsque le système piloté est un engin aérospatial. En effet, dans un engin aérospatial tel qu'un moteur fusée, la détection erronée d'une panne peut entraîner une surconsommation d'ergol ou la mise en œuvre d'une commande inadaptée à l'état réel du système. Ainsi, lorsque le procédé détecte une panne, il faut pouvoir associer à la détection de panne une information de validité indiquant si la détection de panne est fiable ou non, et ce de manière simple et robuste.

L'objectif de l'invention est de proposer un procédé de caractérisation d'un signal qui soit simple, robuste, rapide, générique, et qui fournisse une information fiable sur le signal.

Cet objectif est atteint grâce au fait que le procédé comporte les étapes définies par la revendication 1.

Le signal acquis à l'étape A est une information variable dans le temps. Elle peut être analogique ou numérique, continue ou discrète. Le signal est acquis pendant une durée d'acquisition, ou éventuellement en continu. Néanmoins, le procédé est mis en œuvre à partir seulement de données provenant d'une fenêtre temporelle donnée. Une fenêtre temporelle est un intervalle de temps entre un instant de début et un instant de fin.

Le procédé vise généralement à donner une information à tout instant sur le signal acquis. Par conséquent, les étapes B, C et D sont généralement répétées de nombreuses fois de manière itérative, pour caractériser le signal à différents instants successifs. Par ailleurs, à chacune de ces itérations, l'étape B et/ou l'étape C est réalisée sur la base de valeurs du signal acquises à plusieurs instants. Notamment, à chaque itération, l'étape B et/ou l'étape C peut être réalisée sur la base de valeurs du signal acquises à plusieurs instants antérieurs et/ou postérieurs à l'instant considéré pour lequel l'information caractérisant le signal est déterminée.

Le signal peut avoir une ou plusieurs composantes, chacune pouvant être variable dans le temps. Un signal au sens de l'invention peut donc correspondre à plusieurs signaux physiques que l'on agrège pour former un vecteur. Dans la suite, on parlera donc d'un unique signal, qu'il soit scalaire ou vectoriel ; dans le cas d'un signal vectoriel, chaque composante scalaire, variable dans le temps, sera simplement désignée par le terme de composante. Par partie d'un signal, on désigne soit une sélection d'une ou plusieurs composantes du signal parmi toutes les composantes acquises, soit une sélection temporelle du signal à certains instants de la durée d'acquisition, soit une combinaison de ces deux sélections.

On appelle taux de vibrations une information représentant les vibrations du signal, c'est-à-dire représentant la tendance du signal à fluctuer autour d'une valeur constante ou évoluant lentement, par exemple autour de sa valeur moyenne. Le taux de vibrations peut être notamment une fonction seulement des fluctuations rapides du signal, à l'exclusion d'une information représentant les variations lentes du signal, c'est-à-dire à l'exclusion d'une information représentative de l'évolution de la valeur moyenne du signal et éventuellement de l'évolution des harmoniques de plus basses fréquences. A l'inverse, on appelle niveau de variations une information représentant les variations lentes du signal, c'est-à-dire une information représentative ou fonction seulement de l'évolution de la valeur moyenne du signal et éventuellement de l'évolution des harmoniques de plus basses fréquences. Par exemple, cette information est calculée sur un intervalle de temps d'une amplitude suffisante pour faire apparaître les variations lentes du signal. Le niveau de variations peut être calculé à partir d'une valeur lissée ou moyennée du signal. Par exemple, le niveau de variations peut être le taux d'accroissement de la valeur du signal, ou une valeur obtenue à partir d'une valeur lissée ou moyennée du signal.

Dans le présent exposé, les fréquences (dites basses) qui représentent les variations lentes du signal, et qui sont utilisées pour le calcul du niveau de variations sont les fréquences inférieures ou égales aux fréquences qui régissent la dynamique du système dont est extrait le signal.

A l'inverse, les fréquences qui servent au calcul du taux de vibrations, et représentent seulement les fluctuations rapides du signal, sont des fréquences strictement supérieures aux fréquences basses.

Par exemple, le système peut être représenté par une fonction de transfert et caractérisé par une fréquence propre, laquelle fréquence propre peut être déterminée sur la base de la manière dont le système réagit naturellement ou sous une sollicitation de commande du système. Selon le signal mesuré, la fréquence propre peut être extraite d'un temps caractéristique intrinsèque au système, ou d'un temps caractéristique d'un régime transitoire du système.

Les basses fréquences représentant les variations lentes du signal sont alors les fréquences inférieures à la fréquence propre, tandis que les fréquences supérieures à la fréquence propre sont celles qui représentent les fluctuations rapides du signal et qui sont utilisées pour calculer le taux de vibrations. Dans ce cas, les basses fréquences sont plutôt représentatives du comportement du système, tandis que les hautes fréquences sont plutôt représentatives du bruit. La détermination de la fréquence propre et/ou des basses et hautes fréquences est effectuée par l'homme du métier selon sa connaissance du signal qu'il cherche à caractériser.

Grâce à un tel procédé combinant le taux de vibrations et le niveau de variations, le signal peut être caractérisé à l'aide d'une information, de manière plus simple qu'une caractérisation panne par panne. L'utilisation des deux informations primaires extraites (taux de vibrations et niveau de variations), et leur combinaison, permet d'obtenir simplement une information utile caractérisant le signal et non aisément accessible. En outre, ce procédé peut s'appliquer à n'importe quel signal. La combinaison d'informations opérée à l'étape D peut a priori être de n'importe quel type, allant d'une opération mathématique explicite à une combinaison d'informations utilisant des réseaux de neurones.

Par rapport à l'état de la technique dans lequel sont généralement utilisés une seule information et un seuil, le fait de combiner deux informations, à savoir le taux de vibrations et le niveau de variations, à l'aide d'opérateurs divers, permet en outre de déduire du signal plusieurs types d'informations selon l'opération de combinaison choisie.

Dans certains modes de réalisation, notamment au moyen d'une table prédéterminée, on détermine des valeurs d'au moins un indicateur à partir du taux de vibrations et/ou du niveau de variations, et l'information caractérisant le signal est déterminée à l'étape D à partir dudit au moins un indicateur.

On désigne par indicateur une valeur, de préférence un nombre réel, résultant d'une fonction quelconque appliquée au taux de vibrations et/ou au niveau de variations. Un indicateur représente habituellement une caractéristique spécifique du signal à l'instant considéré. La détermination d'au moins un indicateur à partir d'une table prédéterminée est particulièrement rapide ; en outre, les opérations sur les indicateurs sont souvent plus simples que les opérations sur les signaux. Le procédé est rendu particulièrement rapide au moins pour ces deux raisons, ce qui s'avère important notamment pour des applications en temps réel.

Par exemple, l'opération consistant à déterminer au moins un indicateur à partir du taux de vibrations et/ou du niveau de variations et au moyen d'une table de correspondance prédéterminée peut consister à attribuer au signal un degré d'appartenance à un sous-ensemble. Un sous-ensemble étant donné, l'appartenance du signal à ce sous-ensemble peut valoir 1 si le signal appartient complètement au sous-ensemble, 0 s'il n'y appartient pas du tout, et n'importe quelle valeur entre 0 et 1 si le signal appartient partiellement au sous-ensemble. Cette définition, propre au domaine de la logique floue, constitue une extension de la logique booléenne dans laquelle l'appartenance du signal à un ensemble serait estimée de manière binaire. En outre, l'homme du métier comprendra parfaitement que l'intervalle [0 ; 1] est choisi à titre d'exemple pour des raisons pratiques, mais que n'importe quel intervalle peut se substituer à [0 ; 1]. En logique floue, les sous-ensembles sont appelés variables linguistiques. Ainsi, dans cet exemple, un indicateur correspond à une valeur représentative du signal par rapport à une variable linguistique. De préférence, plusieurs indicateurs sont déterminés. Plus on détermine d'indicateurs, mieux le signal est représenté par ces indicateurs. Ces indicateurs peuvent être déterminés en parallèle, ce qui n'allonge pas le temps d'exécution du procédé de caractérisation. Les indicateurs caractérisent le signal.

En outre, bien que la table de correspondance entre, d'une part, le taux de vibrations et/ou le niveau de variations, et, d'autre part, le ou les indicateur(s), soit prédéterminée, l'étendue des variables linguistiques (autrement dit la taille des sous-ensembles) peut s'adapter au signal acquis. Par exemple, il est évident qu'il serait absurde d'estimer un signal variant entre 1 et 2 de la même façon qu'un signal variant entre -50 et +50. L'étendue des variables linguistiques peut donc être une fonction prédéterminée de l'étendue du signal considéré. Ceci rend le procédé encore plus générique et permet de l'adapter à de nombreuses situations et à de nombreux signaux.

Dans certains modes de réalisation, le signal comprend une information calculée. Par information calculée, on désigne le résultat d'une opération effectuée à partir de données qui ne sont pas forcément issues de mesures. Ainsi, le procédé de caractérisation d'un signal peut s'appliquer à un signal complètement ou partiellement synthétisé ou simulé.

Dans certains modes de réalisation, le signal comprend une information obtenue à l'aide d'au moins un capteur. Ceci inclut toute valeur fournie par un capteur, même si elle est le fruit d'opérations de conversion internes au capteur. Ainsi, le procédé de caractérisation d'un signal peut s'appliquer à un signal physique acquis à l'aide d'un ou plusieurs capteurs. Selon ce qui précède, un signal peut donc être partiellement issu d'un calcul et partiellement issu d'un capteur, au sens où certaines composantes seraient des informations calculées et certaines composantes seraient des informations mesurées à l'aide d'au moins un capteur. Il est également possible de mesurer un signal de manière discrète, notamment grâce à un capteur, et d'ajouter des valeurs temporelles intermédiaires à ce signal grâce à des opérations de calcul, typiquement des interpolations.

Dans certains modes de réalisation, l'étape B comprend les sous-étapes suivantes :

B1) on extrait un contenu vibratoire du signal acquis à l'étape A ;
B2) on calcule le taux de vibrations comme étant égal à une norme du contenu vibratoire extrait à l'étape B1.

On appelle contenu vibratoire une information fonction du temps, obtenue en retirant au signal sa valeur moyenne et éventuellement ses harmoniques de plus basses fréquences, c'est-à-dire en retirant les variations quasi-statiques. Le contenu vibratoire est donc un signal de moyenne nulle. Ensuite, on calcule un taux de vibrations du contenu vibratoire précité. Ce taux de vibrations peut être calculé en appliquant une norme au contenu vibratoire, c'est-à-dire une fonction qui caractérise l'importance du contenu vibratoire. Une norme désigne ici une fonction prenant comme argument un ensemble de données (ici des valeurs à différents instants du contenu vibratoire), et fournissant un résultat d'autant plus grand que ces données ont, en valeur absolue, des valeurs élevées. Dans le cas présent, la détermination du taux de vibrations à l'aide d'une norme est généralement faite en prenant comme argument pour la norme l'ensemble de toutes les valeurs du contenu vibratoire sur une fenêtre temporelle donnée. Par exemple, la norme peut être l'écart-type, qui est une norme sur l'espace des signaux de moyenne nulle et qui est représentatif des variations du signal. Toutefois, d'autres normes peuvent être utilisées. Le fait de considérer une fenêtre temporelle et l'utilisation d'une norme permettent de tenir compte d'un certain historique du signal, donc de lisser l'information de vibrations.

Dans certains modes de réalisation, le taux de vibrations et le niveau de variations sont déterminés pour une même partie du signal, notamment pour les mêmes composantes, et notamment pour toutes les composantes du signal lui-même. Caractériser la même partie du signal permet éventuellement de mutualiser certains calculs intermédiaires, ce qui ajoute en fiabilité et en rapidité au procédé. Cependant, il n'est pas évident qu'il faille toujours procéder ainsi : selon le retour d'expérience, l'homme du métier peut savoir que certaines parties du signal sont plus fiables que d'autres pour donner une première information, tandis que d'autres parties du signal sont, à l'inverse, plus fiables pour donner une seconde information. Par exemple, la première information peut désigner le taux de vibrations et la seconde information peut désigner le niveau de variations. Dans un autre exemple, la première information peut désigner un état du signal, par exemple un état de panne, et la seconde information peut désigner un indice de confiance à accorder audit état du signal. Le choix adéquat des composantes du signal à acquérir et des opérations à effectuer sur ces composantes est réalisé par l'homme du métier grâce à ses connaissances préalables sur les différentes composantes du signal.

Dans certains modes de réalisation, l'étape B et/ou l'étape C est effectuée sur la base de valeurs du signal reçues pendant une fenêtre temporelle glissante. Par exemple, lors d'une mise en œuvre du procédé pour une caractérisation en temps réel, les étapes B, C et D sont itérées à des instants successifs. Ainsi, à chaque itération, l'étape B et/ou l'étape C est réalisée sur la base de valeurs acquises pendant la fenêtre temporelle glissante ; et la fenêtre temporelle se décale dans le temps avec les différents instants successifs. L'utilisation d'une fenêtre temporelle glissante améliore le lissage fourni par le taux de vibrations. Elle permet également d'optimiser les calculs, en particulier le calcul du taux de vibrations au moyen d'une norme. En effet, avec une fenêtre glissante, il est possible de faire les calculs de manière récursive, comme il sera expliqué ultérieurement, ce qui permet une économie en temps de calcul et en place mémoire occupée.

Dans certains modes de réalisation, à l'étape D, la fonction combine le taux de vibrations et le niveau de variations à l'aide d'un seuil, d'un opérateur arithmétique, d'un opérateur booléen et/ou d'un opérateur de logique floue.

Les opérateurs booléens sont par exemple le ET, le OU, le NON, etc. Les opérateurs de logique floue, ou opérateurs flous, sont des fonctions prenant comme argument des indicateurs et renvoyant une valeur comprise dans l'intervalle continu [0 ; 1]. Selon les méthodes utilisées, plusieurs implémentations d'un même opérateur flou peuvent exister. Par exemple, le ET flou peut se définir comme un simple produit ou comme un minimum. En outre, des pondérations peuvent être ajoutées aux opérateurs pour affiner encore les combinaisons.

L'invention concerne également un procédé de détection de pannes dans lequel une panne est détectée sur la base d'au moins une information obtenue par le procédé précédemment décrit.

Grâce au procédé de caractérisation du signal tel que présenté, la détection de pannes se fait de manière plus fiable, plus rapide et plus robuste. Le nombre de fausses détections est minimisé.

L'invention concerne également un programme d'ordinateur comportant des instructions pour l'exécution des étapes du procédé de caractérisation d'un signal décrit ci-dessus lorsque ledit programme est exécuté par un ordinateur. L'invention concerne également un support d'enregistrement lisible par un ordinateur sur lequel est enregistré un programme d'ordinateur comprenant des instructions pour l'exécution des étapes du procédé de caractérisation d'un signal décrit ci-dessus.

L'invention concerne également un dispositif de caractérisation d'un signal selon la revendication 13.

Dans certains modes de réalisation, le dispositif comprend en outre une table prédéterminée ; et les moyens de détermination d'une information sont aptes à déterminer cette information en calculant au moins un indicateur à partir du taux de vibrations et/ou du niveau de variations.

Dans certains modes de réalisation, les moyens de détermination du taux de vibrations B comprennent :

B1) des moyens pour extraire un contenu vibratoire du signal acquis à l'étape A ;
B2) des moyens pour calculer une norme du contenu vibratoire extrait avec les moyens B1.

Dans certains modes de réalisation, les moyens de détermination du taux de vibrations B et/ou les moyens de détermination du niveau de variations C sont configurés pour utiliser des valeurs du signal reçues pendant une fenêtre temporelle glissante.

Dans certains modes de réalisation, les moyens de détermination d'une information D sont aptes à combiner le taux de vibrations et le niveau de variations à l'aide d'un seuil, d'un opérateur arithmétique, d'un opérateur booléen et/ou d'un opérateur de logique floue.

Dans certains modes de réalisation, le dispositif est apte à détecter une panne sur la base d'au moins une information obtenue par les moyens D) de détermination d'une information.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un mode de réalisation du procédé selon l'invention ;
- la figure 2 est une vue schématique de différents signaux acquis et/ou calculés par le procédé selon l'invention ;
- la figure 3 est un détail de la figure 2, illustrant le calcul récursif du taux de vibrations ;
- la figure 4 est un diagramme représentant une table de correspondance prédéterminée entre le taux de vibrations, le niveau de variation et un indice de confiance d'une part, et des indicateurs d'autre part ;
- la figure 5 est une vue schématique d'implantation d'un dispositif de caractérisation du signal selon l'invention.

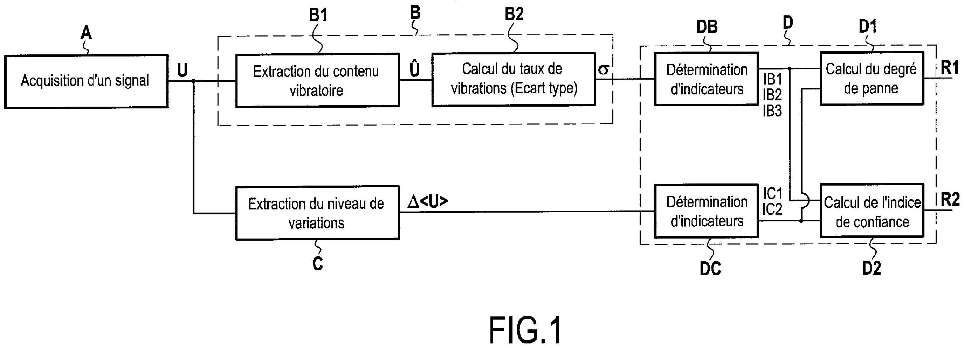

En faisant référence aux figures 1 à 4, un mode de réalisation d'un procédé de caractérisation d'un signal selon l'invention va maintenant être décrit.

Lors d'une étape A, un signal U variable dans le temps est acquis. On note $U(t)$ la valeur du signal U à un instant t. Dans le présent mode de réalisation, le signal U est un signal scalaire continu, dont l'acquisition se poursuit en permanence. Toutefois, un signal discret pourrait se traiter de manière analogue. En outre, le signal pourrait comprendre plusieurs composantes, comme expliqué précédemment ; il suffirait alors d'appliquer le traitement qui suit à tout ou partie des composantes.

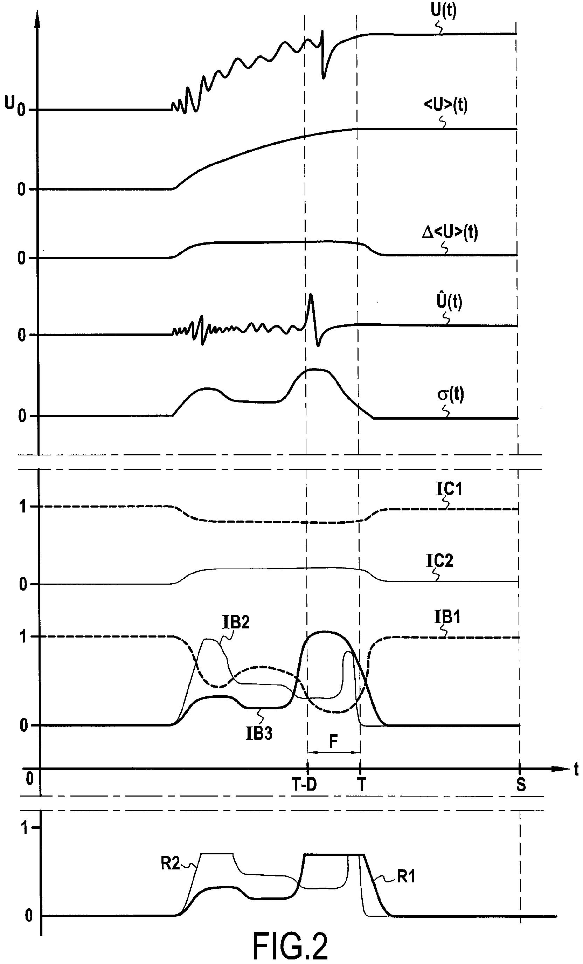

On considère, comme indiqué sur la figure 2, les valeurs du signal acquises entre un instant t=0 et un instant t=S. Dans cette période de temps, on considère notamment une fenêtre temporelle F, caractérisée par une amplitude temporelle D. De surcroît, dans le cas d'un signal discret, on pourrait choisir un pas de temps $\Delta t$ inférieur à D. Le pas de temps $\Delta t$ peut être un multiple de la durée entre deux instants successifs auxquels des valeurs du signal U sont acquises pour faciliter les traitements. Ce pas de temps n'est pas nécessaire dans le cas d'un signal continu, mais comme il apparaîtra par la suite, il peut tout de même être utilisé pour simplifier certains calculs.

Le signal U est acquis en temps réel. Par exemple, le procédé peut viser à déterminer une information caractérisant le signal à un instant T. La description qui suit présente la mise en œuvre du procédé à cet instant T, et les résultats obtenus sont caractéristiques de cet instant T considéré. Dans ce cas, la fenêtre temporelle F locale utilisée par le procédé est de préférence l'intervalle de temps [T-D ; T]. On met en oeuvre les étapes B, C et D du procédé comme il sera décrit par la suite, puis, à un instant ultérieur T+$\Delta T$, on décale la fenêtre temporelle F qui devient l'intervalle [T-D+$\Delta T$; T+$\Delta T$] et on met à nouveau en oeuvre les étapes B, C, D du procédé. Ce décalage est itéré pendant toute la période durant laquelle on suit l'évolution du signal. Ceci constitue le principe d'une fenêtre temporelle glissante. Ainsi, dans ce mode de réalisation, le procédé est mis en œuvre de manière itérative pour caractériser en temps réel le signal U acquis. Toutefois, ce n'est pas le seul mode de réalisation : le signal U pourrait être acquis au préalable, une fois pour toutes, et la mise en œuvre des étapes B, C et D du procédé pourrait avoir lieu a posteriori, sur différentes fenêtres temporelles.

Les étapes B et C du procédé peuvent être indépendantes, comme l'indique l'architecture en parallèle présentée sur la figure 1. Dans l'optique de minimiser les calculs et de rendre le procédé plus rapide, ces étapes sont ici présentées de manière dépendantes et dans un ordre préférentiel.

Lors de l'étape C, on extrait le niveau de variations du signal U. Pour ce faire, on détermine d'abord l'évolution quasi-statique <U> du signal U sur la fenêtre temporelle F. Sur la figure 2, l'évolution quasi-statique <U>(T) du signal U et à l'instant T est déterminée comme étant égale à la valeur moyenne de U sur la fenêtre de temps locale F. Cependant, cette définition n'est pas limitative : par exemple, l'évolution quasi-statique <U> peut aussi désigner la valeur moyenne et les harmoniques les plus basses du signal U sur la fenêtre temporelle F, ou les premiers termes du développement limité de U. En d'autres termes, <U> doit représenter la partie du signal U qui varie lentement, voire ne varie pas.

L'extraction de l'évolution quasi-statique <U> du signal U sur la fenêtre temporelle F peut être réalisée au moyen d'un filtre passe-bas, analogique ou numérique, ou d'un calculateur.

Dans le cas de l'utilisation d'un filtre passe-bas, par exemple du premier ou du second ordre, l'homme du métier détermine la fréquence de coupure comme expliqué précédemment, en fonction des fréquences propres ou du comportement du système dont est extrait le signal. Par exemple, il est connu que pour un système linéaire du second ordre amorti, le temps de passage de 10% à 90% en réponse à un échelon vaut environ 2,2/Pc, où Pc est la pulsation propre du système. Ainsi, pour un transitoire de 2,2 secondes, on retiendra une pulsation propre égale à 1 rd/s soit 0,15 Hz environ.

En outre, pour une robustesse accrue, il est possible d'appliquer à la fréquence propre obtenue une marge pour s'assurer que le filtre passe-bas ne lisse pas trop le signal. Dans l'exemple ci-dessus, il est possible de doubler la fréquence propre pour obtenir la fréquence de coupure, c'est-à-dire en l'occurrence de retenir une pulsation de coupure égale à 0,3 Hz.

Ensuite, on extrait le niveau de variations Δ<U> du signal U. Ce niveau de variations Δ<U> traduit les variations lentes du signal U. Par exemple, comme représenté à la figure 2, le niveau de variations Δ<U> peut être la dérivée de l'évolution quasi-statique <U>. De manière plus simple, le niveau de variations Δ<U> peut être le taux d'accroissement de <U> pendant un pas de temps Δt, c'est-à-dire :

$$\Delta < U > (T) \ = \ (< U > (T) \ - \ < U > (T - \Delta t)) \ / \ \Delta t$$

Cette formule est particulièrement adaptée dans le cas d'un signal discret, mais peut aussi être utilisée pour un signal continu.

Dans cet exemple, le niveau de variations Δ<U> est déterminé sur la base de l'évolution quasi-statique <U> du signal U. Selon le type de signal U, il peut être suffisant de déterminer le niveau de variations, alors noté ΔU, directement sur la base du signal U. Dans le cas où le niveau de variations correspond à un taux d'accroissement, il peut être déterminé selon la formule suivante :

$$\Delta U(T) \ = \ (U(T) \ - \ U(T - \Delta t)) \ / \ \Delta t$$

En pratique, comme le pas de temps Δt est constant lors des différentes itérations du procédé, il n'est pas nécessaire de diviser par Δt dans les formules ci-dessus. En outre, des formules plus complexes peuvent être utilisées pour mesurer le niveau de variations. Il est avantageux de prendre en compte l'aspect dynamique du signal pour distinguer les régimes transitoires des régimes stabilisés ; en effet, le comportement du système dont est issu le signal U peut différer selon le régime, et l'information caractérisant le signal U peut dépendre du caractère stabilisé ou non du régime courant.

Par ailleurs, de manière éventuellement indépendante de l'étape C, on détermine le taux de vibrations du signal (étape B). Cette opération est réalisée en parallèle de l'étape C. Elle peut plus généralement être réalisée avant, simultanément ou après l'étape B. L'étape B comprend les sous-étapes B1 et B2.

Lors de l'étape B1, on extrait le contenu vibratoire Û du signal U. Pour ce faire, on soustrait au signal U sa valeur moyenne et éventuellement ses harmoniques de plus basses fréquences sur la fenêtre temporelle F. La valeur soustraite au signal U peut être la valeur de l'évolution quasi-statique <U> déterminée lors de l'étape C. Il peut également s'agir d'une valeur différente, auquel cas les étapes B et C sont indépendantes. L'extraction du contenu vibratoire Û du signal U sur la fenêtre temporelle F peut être réalisée au moyen d'un filtre passe-haut, analogique ou numérique, ou d'un calculateur utilisant par exemple un algorithme de transformée de Fourier rapide. Le contenu vibratoire est alors calculé sur la base des composantes du signal dont la fréquence est supérieure à la fréquence de coupure fixée pour le filtre passe-haut. La fréquence de coupure du filtre passe-haut peut être supérieure ou égale à la fréquence de coupure du filtre passe-bas utilisé pour le calcul du niveau de variations. Lorsque la fréquence de coupure du filtre passe-haut est strictement supérieure à celle du filtre passe-bas, la zone de fréquence comprise entre les deux fréquences de coupure est une zone d'incertitude dans laquelle les fréquences peuvent être représentatives aussi bien du comportement du système dont est extrait le signal que de bruit. En outre, la fréquence de coupure du filtre passe-haut peut être choisie à une certaine valeur par l'homme du métier lorsque celui-ci a connaissance de phénomènes critiques apparaissant à cette valeur.

Le contenu vibratoire Û extrait est un signal de moyenne nulle correspondant aux fréquences moyennes et hautes du signal U. Il importe à ce stade du procédé de ne pas conserver qu'une seule fréquence, mais bien un ensemble de fréquences moyennes et hautes pour avoir une représentation correcte de la tendance du signal U à fluctuer autour de sa valeur moyenne ou de son évolution quasi-statique. Ainsi, le contenu vibratoire Û est un signal dont la moyenne est nulle.

Ensuite, lors de l'étape B2, on calcule le taux de vibrations σ à l'instant T du signal U comme étant égal à une norme du contenu vibratoire Û sur la fenêtre temporelle F. Dans le présent mode de réalisation, la norme employée est l'écart-type σ, qui est défini comme la racine carrée de la variance :

$$\sigma(T) = \sqrt{\frac{1}{D} \int_{T-D}^{T} \hat{U}(t)^2 \, dt}$$

L'écart-type est une norme 2, faisant intervenir un carré et une racine carrée, et qui est représentative des variations du contenu vibratoire Û autour de sa valeur moyenne, qui est nulle en l'occurrence. D'autres normes peuvent être utilisées, qui ont d'autres significations. Par exemple, une norme 3 donnerait des informations sur l'asymétrie du contenu vibratoire Û. Une norme 4 donnerait des informations sur l'aplatissement du contenu vibratoire Û. Le choix de la norme dépend du type d'information que l'on souhaite obtenir. Dans le cas où une norme est utilisée pour déterminer le taux de vibrations, il est avantageux de choisir comme taux de vibrations une norme 2 du contenu vibratoire, tel que l'écart-type. D'autres normes 2 que l'écart-type peuvent être utilisées pour calculer le taux de vibrations, selon la définition étendue d'une norme détaillée ci-dessus.

Comme on peut le voir sur la figure 2, le fait de calculer le taux de vibrations avec une norme sur une fenêtre temporelle glissante induit un lissage entre le contenu vibratoire Û et le taux de vibrations σ. Le taux de vibrations est donc moins bruité que le contenu vibratoire ; il fournit une information plus globale sur le signal U.

Pour augmenter la rapidité de l'étape B2 lors de l'itération du procédé, il est possible de calculer l'écart-type de manière récursive. Ainsi, le procédé ayant été réalisé à un instant T, si on se place à un instant T+ΔT, le calcul de l'écart-type à l'instant T+ΔT peut ne pas utiliser toutes les valeurs du contenu vibratoire Û comprises entre dans la fenêtre temporelle F valant [T+ΔT-D; T+ΔT], mais seulement les valeurs du contenu vibratoire Û comprises dans les intervalles J1=[T-D ; T+ΔT-D] et J2=[T ; T+ΔT], ainsi que l'écart-type calculé à l'instant T. En effet, on peut montrer facilement que :

$$\sigma(T + \Delta T) = \sqrt{\sigma(T)^2 - \frac{1}{D} \int_{T-D}^{T+\Delta T-D} \hat{U}(t)^2 \, dt + \frac{1}{D} \int_{T}^{T+\Delta T} \hat{U}(t)^2 \, dt}$$

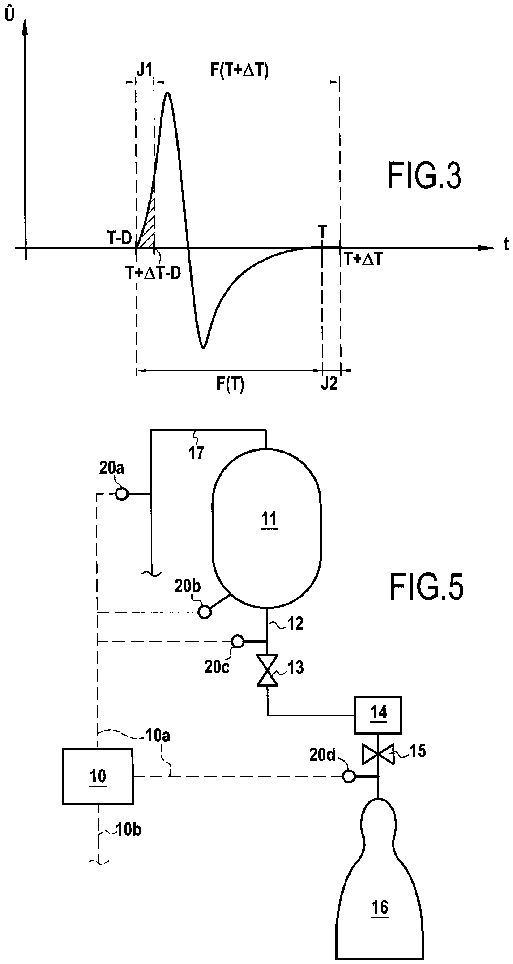

Comme illustré sur la figure 3, ce calcul s'interprète de la façon suivante : on calcule σ(T+ΔT) à partir de σ(T) en retranchant (respectivement en ajoutant) les termes qui sortent (respectivement qui entrent) dans la fenêtre temporelle glissante F. Les intervalles J1 et J2 d'amplitude ΔT pouvant être beaucoup plus petits que la fenêtre temporelle F d'amplitude D, le calcul d'intégrales est grandement accéléré. L'avantage de cette méthode est encore accru dans le cas d'un signal discret, dans la mesure où les intégrales de la formule précédente sont remplacées par des valeurs du contenu vibratoire Û facilement accessibles :

$$\sigma(T + \Delta T) = \sqrt{\sigma(T)^2 - \frac{\Delta t}{D} \hat{U}(T - D)^2 + \frac{\Delta t}{D} \hat{U}(T + \Delta T)^2}$$

Comme on peut le voir sur la figure 1, une fois le niveau de variations Δ<U> (étape C) et le taux de vibrations σ (étape B) déterminés, il est possible de déterminer une information caractérisant le signal, en appliquant une fonction de détermination prenant comme arguments au moins le taux de vibrations et le niveau de variations (étape D). Dans le présent mode de réalisation, l'étape D de détermination comprend des étapes préalables DB, DC de détermination d'indicateurs.

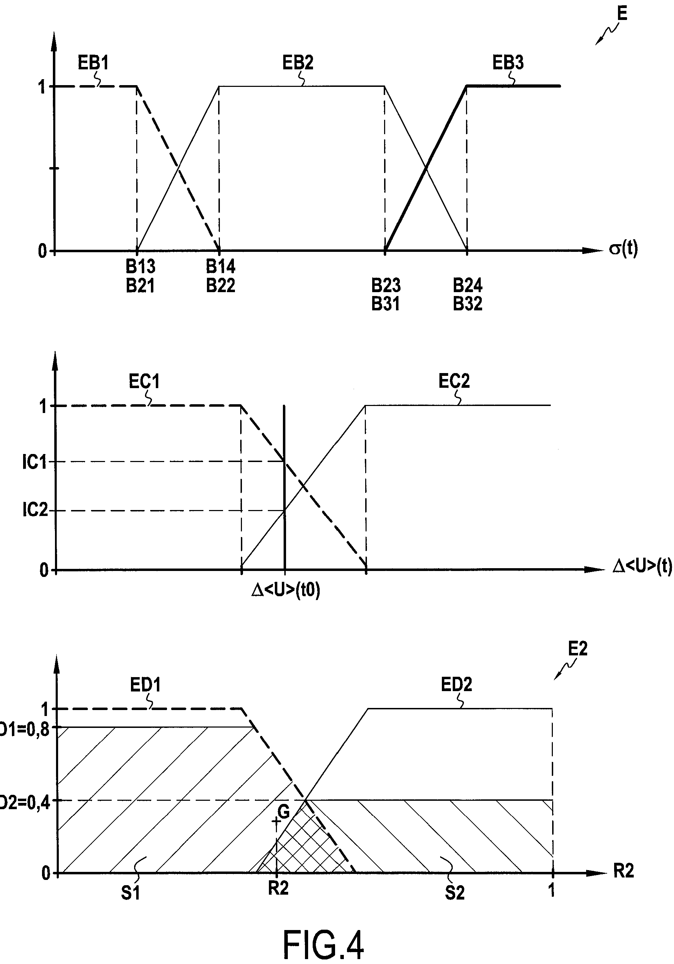

Comme illustré à la figure 4, pour le taux de vibrations σ et le niveau de variations Δ<U>, on dispose d'une table prédéterminée E sur la base de laquelle sont déterminées les valeurs de cinq indicateurs. Pour le taux de vibrations σ obtenu à l'étape B, la table E comprend les données nécessaires au calcul de trois indicateurs EB1, EB2 et EB3. L'indicateur EB1 est représentatif du fait que le taux de vibrations σ est bas : il vaut 1 lorsqu'il est effectivement bas, décroît de 1 à 0 lorsque le taux de vibrations s'accroît depuis une valeur B13 à laquelle on considère encore qu'il est tout à fait bas (EB1=1), jusqu'à une valeur B14 à laquelle on considère qu'il n'est plus bas (EB1=0), et reste égal à 0 au-dessus de cette valeur B14. Les indicateurs EB2, EB3 fonctionnent sur le même principe. Ils sont respectivement représentatifs du fait que le taux de vibrations σ est moyen ou élevé. La table E comprend également les données nécessaires au calcul de deux indicateurs EC1 et EC2 pour le niveau de variations Δ<U> obtenu à l'étape C. Les indicateurs EC1 et EC2 sont respectivement représentatifs du fait que le niveau de variations $\Delta$<U> est bas ou élevé. Les valeurs des indicateurs EC1 et EC2 suivent le même modèle que celles des indicateurs EB1 et EB3. Les indicateurs de la table prédéterminée E sont donc à valeurs dans l'intervalle [0 ; 1]. L'intervalle [0 ; 1] est ici choisi pour des raisons pratiques mais n'importe quel intervalle peut être utilisé.

Sur la figure 4 sont représentés les cinq indicateurs EB1, EB2, EB3, EC1, EC2 en fonction respectivement du taux de vibrations $\sigma$ et du niveau de variations $\Delta$<U>. Comme il ressort de la figure 4, chaque indicateur peut être représenté par un trapèze déterminé par quatre points. Par exemple, l'indicateur EB2 est déterminé par quatre points d'abscisses respectives B21, B22, B23 et B24, et d'ordonnées respectives 0, 1, 1, 0. Le coin supérieur droit de l'indicateur EB1 a pour abscisse B13 et le coin inférieur droit de l'indicateur EB1 a pour abscisse B14. Dans l'exemple de la figure 4, on a choisi B13 égal à B21 et B14 égal à B22, mais l'une au moins de ces égalité peut ne pas être réalisée. Toutefois, si l'on souhaite que les indicateurs fournissent une description complète du signal, il est préférable qu'ils se chevauchent ; ainsi, on veillera par exemple à ce que l'abscisse B14 soit supérieure à l'abscisse B21, et de même que l'abscisse B24 soit supérieure à l'abscisse B31 du coin inférieur gauche de l'indicateur EB3.

La table d'indicateurs E est prédéterminée, c'est-à-dire déterminée avant la mise en œuvre du procédé de caractérisation du signal, mais les valeurs des indicateurs peuvent être calculées dynamiquement à partir de l'étendue des signaux U, $\Delta$<U> et/ou $\sigma$. En effet, par exemple, il serait absurde d'utiliser le même indicateur de niveau moyen EB2 valant 1 lorsque le taux de vibrations est compris entre 5 et 10, avec deux taux de vibrations $\sigma$1 et $\sigma$2, $\sigma$1 variant entre 0 et 2 et $\sigma$2 variant entre -50 et 50. C'est pourquoi il est possible de rendre les abscisses des coins du trapèze proportionnelles, par exemple, à l'étendue du taux de vibrations considéré. On comprend ainsi que la table E peut ne pas être remplie avec des valeurs fixes prédéterminées, mais avec des relations (ou fonctions) prédéterminées. Lesdites relations ne sont pas nécessairement des relations de proportionnalité.

La figure 4 présente des indicateurs en forme de trapèze, cependant ce n'est pas la seule forme possible. Les indicateurs peuvent être n'importe quelle fonction. Par exemple, la partie de l'indicateur EB2 comprise entre les points d'abscisses B21 et B22 peut être quadratique au lieu d'être linéaire, ou de toute autre forme.

Grâce à la table prédéterminée E, à chaque instant T, on calcule les valeurs des indicateurs associées au taux de vibrations $\sigma$(T). On construit ainsi trois indicateurs IB1, IB2, IB3 selon la formule $IB_i(T) = EB_i(\sigma(T))$, où i prend les valeurs 1, 2 et 3. De même, à chaque instant T, on calcule les valeurs des indicateurs associées au niveau de variations $\Delta$<U>(T). On construit ainsi deux indicateurs IC1, IC2 selon la formule $IC_i(T) = EB_i(\Delta<U>(T))$, où i prend les valeurs 1 et 2. Un exemple de construction des indicateurs IC1 et IC2 à un instant t0 est représenté sur la figure 4. Les indicateurs IB1, IB2, IB3, IC1 et IC2, dont les courbes en fonction du temps sont représentées sur la partie inférieure de la figure 2, sont donc des fonctions du temps représentatives du taux de vibrations $\sigma$ et du niveau de variations $\Delta$<U>.

Dans le vocabulaire de la logique floue, les indicateurs sont appelés variables linguistiques. Les étapes DB et DC consistent à associer au taux de vibrations $\sigma$ et au niveau de variations $\Delta$<U> des indicateurs fonctions du temps et représentant un niveau d'adéquation entre le taux de vibrations et le niveau de variations d'une part, et les variables linguistiques d'autre part. De telles étapes sont parfois désignées par le terme anglais « fuzzification ». En d'autres termes, par exemple, à partir de l'indicateur de niveau bas EB1, l'indicateur IB1 indique, en fonction du temps, à quel point le taux de vibrations est bas. L'utilisation d'indicateurs continus, comme présentés ci-dessus, permet de décrire le taux de vibrations et le niveau de variations de manière plus fine que si des indicateurs booléens étaient utilisés. Les nuances du taux de vibrations et du niveau de variations sont donc mieux exploitées.

Une fois les indicateurs IB1, IB2, IB3, IC1, IC2 du taux de vibrations $\sigma$ et du niveau de variations $\Delta$<U> déterminés (étapes DB et DC), ils sont combinés. Dans le dispositif présenté, ils sont combinés de deux manières différentes (étapes D1 et D2) pour obtenir deux informations différentes complémentaires R1 et R2 utiles pour caractériser le signal U. Les deux informations R1 et R2 sont indépendantes et peuvent donc être calculées en parallèle, ce qui diminue la durée totale d'exécution du procédé. En outre, même si le présent mode de réalisation se limite au calcul de deux informations R1 et R2, il est possible de ne déterminer qu'une seule information R1 lors d'une seule étape D1, ou au moins trois informations R1, R2, R3, etc. lors d'au moins trois étapes correspondantes D1, D2, D3, etc. Chaque étape D1, D2 peut utiliser tout ou partie des indicateurs déterminés lors des étapes DB et DC.

Le taux de vibrations $\sigma$, en tant qu'information quantifiant les fluctuations rapides du signal U, et le niveau de variations $\Delta$<U>, en tant qu'information quantifiant les variations lentes du signal U, sont complémentaires. Ainsi, les indicateurs qui en résultent permettent de caractériser le signal U de manière fine : il est possible d'identifier non seulement des états-types du signal U, par exemple un état nominal caractérisé par un niveau de variations bas et un taux de vibrations moyen, mais aussi d'identifier des états dans lesquels le signal U est à mi-chemin entre plusieurs états-types. Dans le présent mode de réalisation, chacune des étapes D1 et D2 combine au moins un indicateur relatif au niveau de variations et au moins un indicateur relatif au taux de vibrations.

Ainsi, lors d'une étape D1, on calcule une première information R1 avec les outils de la logique floue. Cette première information R1 est ici un « degré de panne ». Dans le cas présenté, le signal U est caractéristique d'une panne du système ou de la chaîne de mesure dès lors que son taux de vibrations est élevé tandis que son niveau de variations est bas. L'étape D1 consiste alors à effectuer le calcul suivant : R1 = F1(IB3, IC1). La fonction F1 est par exemple un ET flou (R1 = IB3 ET IC1), et l'interprétation de la fonction F1 est alors la suivante : le degré de panne R1 est élevé si le taux de vibrations est élevé ET si le niveau de variations est bas. Selon la méthode utilisée, il existe plusieurs implémentations du ET flou. Par exemple, sur la représentation graphique de la figure 4, le ET flou est calculé comme un minimum (R1 = min{IB3, IC1}). Le ET flou peut aussi être un produit (R1 = IB3 x IC1).

On a présenté le cas où F1 utilise un opérateur flou pour la combinaison d'indicateurs relatifs au niveau de variations et au taux de vibrations, mais d'autres fonctions pour combiner des indicateurs relatifs au niveau de variations et des indicateurs relatifs au taux de vibrations, peuvent être utilisées. Un seuil classique, par exemple, peut être employé pour calculer un indicateur fonction du taux de vibrations. Par exemple, si le taux de vibrations est inférieur à une valeur basse, on peut en déduire que le signal est plat ou écrêté, ce qui est révélateur d'une panne pour certains types de systèmes. Cet indicateur est alors combiné avec un indicateur fonction du niveau de variations afin de confirmer la valeur du degré de panne du système.

Lors d'une étape D2 parallèle à l'étape D1, on calcule un indice de confiance R2 à partir de tout ou partie des indicateurs IB1, IB2, IB3, IC1, IC2. Comme il sera décrit par la suite, dans certains modes de réalisation, l'indice de confiance R2 est calculé à partir des indicateurs IB2 et IC1. En l'occurrence, cet indice de confiance R2 traduit la confiance qu'un opérateur ou un système de post-traitement peut accorder à l'information R1 déduite de l'étape D1. L'indice de confiance est élevé si le signal U est jugé fiable. Par exemple, le signal U est jugé d'autant plus fiable que son taux de vibrations $\sigma$ est moyen et que son niveau de variations $\Delta<U>$ est faible. En effet, dès lors que le niveau de variations n'est pas faible, alors le système duquel est acquis le signal U est dans une phase transitoire dans laquelle il est difficile de déduire un état de panne, même lorsque le taux de vibrations est bas ou élevé, dans la mesure où des retards de mesure ou l'inertie physique du système peuvent perturber la caractérisation du signal U. Ainsi, grâce à la combinaison du taux de vibrations et du niveau de variations pour calculer un indice de confiance, les cas de fausses détections sont évités.

L'indice de confiance R2 est calculé simplement avec l'indicateur de taux de vibrations moyen IB2 et l'indicateur de niveau de variations faible IC1 selon la formule : R2 = IB2 ET IC1. Selon la méthode employée, le ET flou peut être calculé comme un minimum, comme un produit, ou comme toute autre fonction cohérente dans le cadre de la logique floue ; dans le cas présent, on utilise la relation R2 = IB2 x IC1. Ce mode de réalisation est particulièrement simple tout en étant efficace. De par la simplicité des calculs aux différentes étapes, il est en outre facile à implémenter et très rapide.

Dans ce mode de réalisation, au cours de l'étape D2, l'indice de confiance R2 est calculé directement à partir d'indicateurs relatifs au taux de vibrations $\sigma$ et au niveau de variations $\Delta<U>$. Il existe cependant des manières plus élaborées de déterminer l'indice de confiance R2, ou de manière générale une information caractérisant le signal U. Ainsi, dans un autre mode de réalisation, au cours de l'étape D2, on détermine d'abord l'évolution temporelle d'indicateurs ID1, ID2 représentatifs de l'indice de confiance R2 à partir des valeurs des indicateurs du taux de vibrations $\sigma$ et du niveau de variations $\Delta<U>$. Bien que l'indice de confiance R2 soit encore inconnu à ce stade du procédé, les indicateurs ID1 et ID2 obtenus permettent de qualifier l'indice de confiance R2 : ID1 est un indicateur d'indice de confiance bas et ID2 est un indicateur d'indice de confiance élevé. Une fois l'évolution temporelle des indicateurs ID1 et ID2 déterminée, dans une seconde étape, on reconstruit une valeur de l'indice de confiance R2 sur la base de ces indicateurs représentatifs associés.

Pour calculer l'évolution temporelle des indicateurs ID1 et ID2, il est nécessaire de disposer de règles d'inférence floues. Les règles d'inférence floues permettent d'obtenir une information sur l'indice de confiance R2 sous forme d'indicateurs ID1, ID2 représentatifs de celui-ci, à partir des données connues, à savoir les autres indicateurs IB1, IB2, IB3, IC1 et IC2 (ou à partir d'informations relatives au taux de vibrations $\sigma$ et au niveau de variations $\Delta<U>$). Une règle d'inférence floue est un opérateur de logique floue qui prend la forme d'une implication, par exemple «si le niveau de variations est élevé (IC2), alors l'indice de confiance est bas (ID1) ». Cette règle consiste en la traduction logique d'une observation empirique, à savoir le fait que lorsque le système est en régime transitoire, il est difficile de déceler avec certitude un état de panne. Dans une règle d'inférence floue, la condition nécessaire (la conclusion, ici « l'indice de confiance est bas») a le même degré d'exactitude que la condition suffisante (la prémisse, ici « le niveau de variations est élevé). Autrement dit, la règle d'inférence floue donnée en exemple correspond à l'égalité ID1 = IC2. Pour cette règle d'inférence floue, si l'indicateur IC2 de niveau de variations élevé vaut 0,8, alors l'indicateur d'indice de confiance bas ID1 vaudra 0,8.

Une autre règle d'inférence floue utilisée dans ce mode de réalisation est : « si le niveau de variations est bas et le taux vibratoire est élevé, alors l'indice de confiance est haut ». L'utilisation de cette règle est la même que pour la règle précédente, si ce n'est qu'il faut d'abord utiliser un ET flou pour déterminer la valeur de la prémisse «le niveau de variations est bas ET le taux vibratoire est élevé ». Autrement dit, cette deuxième règle d'inférence floue correspond à l'égalité ID2 = IC1 ET IB3. Par exemple, une fois ce ET flou appliqué, on calcule que la valeur d'une telle prémisse vaut 0,4. Ainsi, dans cet exemple, l'indice de confiance sera caractérisé par les valeurs ID1 = 0,8 et ID2 = 0,4.

Dans certains modes de réalisation, les valeurs ID1 et ID2 sont considérées comme des informations caractérisant le signal U, et sont directement renvoyées en sortie de l'étape D2 par le procédé qui, dans ce cas, s'arrête ou passe à l'itération suivante. Toutefois, dans certains autres modes de réalisation, les valeurs des indicateurs ID1 et ID2 ne sont pas renvoyées telles quelles ; la valeur de l'indice de confiance R2 est obtenue par une fonction prenant comme arguments les deux indicateurs ID1 et ID2, eux-mêmes représentatifs de l'indice de confiance R2. Plusieurs méthodes, désignées par le terme anglais « defuzzification », existent pour réaliser une telle opération. A l'inverse de l'opération de fuzzification qui consistait à associer les indicateurs IB1, IB2, IB3, IC1, IC2 aux valeurs du taux de vibrations σ et au niveau de variations Δ<U>, l'opération de defuzzification consiste à reconstruire l'indice de confiance R2 à partir d'indicateurs ID1, ID2.

Pour reconstruire l'indice de confiance R2 à partir des indicateurs ID1 et ID2, on détermine à l'avance une table E2 comprenant deux variables linguistiques (indicateurs) ED1, ED2 relatifs à l'indice de confiance R2 et correspondant aux indicateurs ID1 et ID2 ; tandis que les indicateurs ID1 et ID2 sont des fonctions du temps, les indicateurs ED1 et ED2 sont exprimés en fonction de l'indice de confiance R2 selon les relations ID1(t) = ED1(R2(t)) et ID2(t) = ED2(R2(t)). Sur la figure 4, on a représenté les deux indicateurs ED1 et ED2, correspondant respectivement à des niveaux de confiance bas et élevé.

On calcule alors R2 à partir de ID1, ID2 et de ED1, ED2 par une méthode de defuzzification. Dans le présent mode de réalisation, la méthode de defuzzification employée est appelée la méthode du centre de gravité. Selon cette méthode, la valeur de l'indice de confiance R2 est l'abscisse du centre de gravité de la réunion des surfaces S1 et S2 définies comme suit : la surface S1 est la surface comprise entre l'axe des abscisses et la courbe de l'indicateur ED1, pour des ordonnées n'excédant pas la valeur ID1. De même, la surface S2 est la surface comprise entre l'axe des abscisses et la courbe de l'indicateur ED2, pour des ordonnées n'excédant pas la valeur ID2. Chacune des surfaces S1 et S2 est hachurée sur la figure 4, dans le cas du présent exemple. Le centre de gravité G de la surface hachurée a une abscisse R2, qui est l'indice de confiance recherché. D'autres méthodes que la méthode du centre de gravité peuvent être utilisées pour reconstruire une valeur de l'indice de confiance R2 à partir des indicateurs ID1, ID2. En outre, on peut utiliser plus de deux indicateurs à condition de fournir à la table prédéterminée E autant de variables linguistiques et de règles d'inférence floues.

Comme il a été expliqué au cours de la description, le procédé revêt un caractère générique et peut être adaptée à des signaux de tous types. L'utilisation d'indicateurs permet une caractérisation plus précise du signal et une meilleure prise en compte des critères de panne.

La figure 5 représente un exemple d'implantation d'un dispositif de caractérisation d'un signal selon l'invention. Il s'agit en l'espèce d'un moteur-fusée comprenant un réservoir 11, une conduite d'alimentation 12 munie d'une vanne d'alimentation 13 et sur laquelle se trouve une pompe 14, la conduite d'alimentation s'étendant entre le réservoir 11 et une tuyère 16. Une vanne de commande 15 est située entre la pompe 14 et la tuyère 16. En outre, une conduite de pressurisation 17 est reliée au réservoir pour le maintenir sous pression.

Le moteur-fusée comprend également un dispositif de caractérisation du signal 10. Le dispositif de caractérisation du signal 10 comprend des câbles d'acquisition de données en entrée 10a, et un câble de transmission de données en sortie 10b. Les câbles 10a sont raccordés à des capteurs 20a, 20b, 20c, 20d placés à divers emplacements sur le moteur-fusée et renvoyant divers signaux au dispositif de caractérisation du signal 10. Le dispositif de caractérisation du signal 10 comprend :

- des moyens d'acquisition d'un signal, incluant notamment une carte d'acquisition de données pour acquérir les données transmises par les câbles 10a (ces données constituant le signal) ; ainsi que

- un calculateur, qui applique un programme de traitements de données au signal acquis, et constitue ainsi à la fois des moyens de détermination d'un taux de vibrations aptes à déterminer un taux de vibrations d'au moins une partie du signal acquis, des moyens de détermination d'un niveau de variations aptes à déterminer un niveau de variations d'au moins une partie du signal acquis, et des moyens de détermination d'une information caractérisant le signal acquis, aptes à déterminer une information caractérisant le signal en appliquant une fonction prenant comme arguments au moins le taux de vibrations et le niveau de variations.

Le dispositif de caractérisation du signal 10 permet donc de mettre en œuvre le procédé de caractérisation du signal selon l'invention. En particulier, le calculateur permet de réaliser les étapes de procédé correspondant à la figure 1, décrites précédemment. Il peut appliquer ce procédé à tout ou partie des signaux reçus. L'information caractérisant le signal est alors transmise via les câbles 10b de transmission de données en sortie.

Le moteur-fusée de la figure 5 et l'emplacement des capteurs 20a, 20b, 20c, 20d ne sont que des exemples d'application et d'implantation d'un dispositif de caractérisation de signal selon l'invention. Un dispositif de caractérisation de signal selon l'invention peut être employé sur tout type d'appareil renvoyant un signal.

**Revendications**

1.  Procédé de caractérisation d'un signal (U) produit par des moyens d'acquisition raccordés à un appareil, comportant les étapes suivantes :

    A) on acquiert un signal (U) à l'aide des moyens d'acquisition ;
    B) on détermine un taux de vibrations ($\sigma$) d'au moins une partie du signal (U) acquis à l'étape A, le taux de vibrations étant une fonction seulement des fluctuations rapides du signal, à l'exclusion d'une information représentant les variations lentes du signal ;
    C) on détermine un niveau de variations ($\Delta$<U>) d'au moins une partie du signal (U) acquis à l'étape A, le niveau de variations étant représentatif des variations lentes du signal ;
    et **caractérisé en ce qu**'il comprend en outre l'étape suivante :
    D) on détermine au moins deux informations (R1, R2) caractérisant le signal en appliquant au moins deux fonctions différentes combinant au moins ledit taux de vibrations ($\sigma$) et ledit niveau de variations ($\Delta$<U>).

2.  Procédé de caractérisation d'un signal selon la revendication 1, dans lequel, notamment au moyen d'une table prédéterminée (E), on calcule des valeurs d'au moins un indicateur (IB1, IB2, IB3, IC1, IC2) à partir du taux de vibrations ($\sigma$) et/ou du niveau de variations ($\Delta$<U>) ; et l'information caractérisant le signal est déterminée à l'étape D à partir dudit au moins un indicateur.

3.  Procédé de caractérisation d'un signal selon la revendication 1 ou 2, dans lequel le signal (U) comprend une information calculée.

4.  Procédé de caractérisation d'un signal selon l'une quelconque des revendications précédentes, dans lequel le signal (U) comprend une information obtenue à l'aide d'au moins un capteur.

5.  Procédé de caractérisation d'un signal selon l'une quelconque des revendications précédentes, dans lequel l'étape B comprend les sous-étapes suivantes :

    B1) on extrait un contenu vibratoire (Û) du signal (U) acquis à l'étape A ;
    B2) on calcule le taux de vibrations ($\sigma$) comme étant égal à une norme du contenu vibratoire (Û) obtenu à l'étape B1.

6.  Procédé de caractérisation d'un signal selon l'une quelconque des revendications précédentes, dans lequel le taux de vibrations ($\sigma$) et le niveau de variations ($\Delta$<U>) sont déterminés pour une même partie du signal (U).

7.  Procédé de caractérisation d'un signal selon l'une quelconque des revendications précédentes, dans lequel l'étape B et/ou l'étape C est effectuée sur la base de valeurs du signal (U) reçues pendant une fenêtre temporelle glissante (F).

8.  Procédé de caractérisation d'un signal selon l'une quelconque des revendications précédentes, dans lequel à l'étape D, la fonction combine le taux de vibrations ($\sigma$) et le niveau de variations ($\Delta$<U>) à l'aide d'un seuil, d'un opérateur arithmétique, d'un opérateur booléen et/ou d'un opérateur de logique floue.

9.  Procédé de caractérisation d'un signal selon l'une quelconque des revendications précédentes, dans lequel lesdites au moins deux informations comprennent une première information désignant un état du signal et une seconde information désignant un indice de confiance à accorder audit état du signal.

10. Procédé de détection de pannes dans lequel une panne est détectée sur la base d'au moins une information (R1, R2) obtenue par le procédé selon l'une quelconque des revendications précédentes.

11. Programme d'ordinateur comportant des instructions pour l'exécution des étapes d'un procédé selon l'une quelconque des revendications 1 à 10 lorsque ledit programme est exécuté par un ordinateur.

12. Support d'enregistrement lisible par un ordinateur sur lequel est enregistré un programme d'ordinateur comprenant des instructions pour l'exécution des étapes d'un procédé selon l'une quelconque des revendications 1 à 10.

13. Dispositif de caractérisation d'un signal (U), comportant:

A) des moyens d'acquisition d'un signal (U) configurés pour être raccordés à un appareil ;

B) des moyens de détermination d'un taux de vibrations ($\sigma$), aptes à déterminer un taux de vibrations d'au moins une partie du signal acquis, le taux de vibrations étant une fonction seulement des fluctuations rapides du signal, à l'exclusion d'une information représentant les variations lentes du signal ;

C) des moyens de détermination d'un niveau de variations ($\Delta$<U>), aptes à déterminer un niveau de variations d'au moins une partie du signal acquis, le niveau de variations étant représentatif des variations lentes du signal; et **caractérisé en ce qu'**il comporte en outre :

D) des moyens de détermination d'au moins deux informations caractérisant le signal acquis, aptes à déterminer les informations caractérisant ledit signal en appliquant au moins deux fonctions différentes combinant au moins ledit taux de vibrations et ledit niveau de variations.

**Patentansprüche**

1. Verfahren zum Charakterisieren eines von Erfassungsmitteln, die an einen Apparat angeschlossen sind, produzierten Signals (U), aufweisend die folgenden Schritte:

A) Erfassen eines Signals (U) mit Hilfe der Erfassungsmittel;

B) Bestimmen eines Vibrationsgrads ($\sigma$) mindestens eines Teils des in Schritt A erfassten Signals (U), wobei der Vibrationsgrad eine Funktion nur der schnellen Fluktuationen des Signals ist, unter Ausschluss einer Information, die die langsamen Variationen des Signals darstellt;

C) Bestimmen eines Variationsniveaus ($\Delta$<U>) mindestens eines Teils des in Schritt A erfassten Signals (U), wobei das Variationsniveau für die langsamen Variationen des Signals repräsentativ ist; und **dadurch gekennzeichnet, dass** es ferner den folgenden Schritt umfasst:

D) Bestimmen von mindestens zwei Informationen (R1, R2), die das Signal charakterisieren, durch Anwenden von mindestens zwei unterschiedlichen Funktionen, die mindestens den Vibrationsgrad ($\sigma$) und das Variationsniveau ($\Delta$<U>) kombinieren.

2. Verfahren zum Charakterisieren eines Signals nach Anspruch 1, wobei insbesondere mittels einer vorher festgelegten Tabelle (E) Werte mindestens eines Indikators (IB1, IB2, IB3, IC1, IC2) auf der Basis des Vibrationsgrads ($\sigma$) und/oder des Variationsniveaus ($\Delta$<U>) berechnet werden; und die das Signal charakterisierende Information in Schritt D auf der Basis des mindestens einen Indikators bestimmt wird.

3. Verfahren zum Charakterisieren eines Signals nach Anspruch 1 oder 2, wobei das Signal (U) eine berechnete Information umfasst.

4. Verfahren zum Charakterisieren eines Signals nach einem der vorangehenden Ansprüche, wobei das Signal (U) eine mit Hilfe von mindestens einem Sensor erhaltene Information umfasst.

5. Verfahren zum Charakterisieren eines Signals nach einem der vorangehenden Ansprüche, wobei der Schritt B die folgenden Unterschritte umfasst:

B1) Extrahieren eines Vibrationsinhalts (Û) des in Schritt A erfassten Signals (U);

B2) Berechnen des Vibrationsgrads ($\sigma$) als gleich einer Norm des in Schritt B1 erhaltenen Vibrationsinhalts (Û).

6. Verfahren zum Charakterisieren eines Signals nach einem der vorangehenden Ansprüche, wobei der Vibrationsgrad ($\sigma$) und das Variationsniveau ($\Delta$<U>) für denselben Teil des Signals (U) bestimmt werden.

7. Verfahren zum Charakterisieren eines Signals nach einem der vorangehenden Ansprüche, wobei der Schritt B und/oder der Schritt C auf der Basis von während eines gleitenden Zeitfensters (F) erhaltenen Werten des Signals (U) durchgeführt werden.

8. Verfahren zum Charakterisieren eines Signals nach einem der vorangehenden Ansprüche, wobei in Schritt D die Funktion den Vibrationsgrad ($\sigma$) und das Variationsniveau ($\Delta$<U>) mit Hilfe eines Schwellenwerts, eines arithmetischen Operators, eines booleschen Operators und/oder eines Fuzzylogik-Operator kombiniert.

9. Verfahren zum Charakterisieren eines Signals nach einem der vorangehenden Ansprüche, wobei die mindestens zwei Informationen eine erste Information umfassen, die einen Zustand des Signals bezeichnet, und eine zweite Information, die einen dem Zustand des Signals zuzuweisenden Vertrauensindex bezeichnet.

10. Verfahren zum Ermitteln von Pannen, wobei eine Panne auf der Basis mindestens einer von dem Verfahren nach einem der vorangehenden Ansprüche erhaltenen Information (R1, R2) ermittelt wird.

11. Rechnerprogramm, aufweisend Befehle für die Ausführung der Schritte eines Verfahrens nach einem der Ansprüche 1 bis 10, wenn das Programm von einem Rechner ausgeführt wird.

12. Rechnerlesbares Speichermedium, auf dem ein Rechnerprogramm gespeichert ist, welches Befehle für die Ausführung der Schritte eines Verfahrens nach einem der Ansprüche 1 bis 10 umfasst.

13. Vorrichtung zum Charakterisieren eines Signals (U), aufweisend:

A) Mittel zum Erfassen eines Signals (U), die ausgelegt sind, um an einen Apparat angeschlossen zu sein;
B) Mittel zum Bestimmen eines Vibrationsgrads ($\sigma$), die imstande sind, einen Vibrationsgrad mindestens eines Teils des erfassten Signals zu bestimmen, wobei der Vibrationsgrad eine Funktion nur der schnellen Fluktuationen des Signals ist, unter Ausschluss einer Information, die die langsamen Variationen des Signals darstellt;
C) Mittel zum Bestimmen eines Variationsniveaus ($\Delta$<U>), die imstande sind, ein Variationsniveau mindestens eines Teils des erfassten Signals zu bestimmen, wobei das Variationsniveau für die langsamen Variationen des Signals repräsentativ ist;

und **dadurch gekennzeichnet, dass** sie ferner aufweist:
D) Mittel zum Bestimmen von mindestens zwei Informationen, die das ermittelte Signal charakterisieren, die imstande sind, die das Signal charakterisierenden Informationen durch Anwenden von mindestens zwei unterschiedlichen Funktionen zu bestimmen, die mindestens den Vibrationsgrad und das Variationsniveau kombinieren.

**Claims**

1. A method of characterizing a signal (U) produced by acquisition means connected to equipment, the method comprising the following steps:

A) acquiring a signal (U) using the acquisition means;
B) determining a vibration rating ($\sigma$) of at least a portion of the signal (U) acquired in step A, the vibration rating being a function solely of rapid fluctuations of the signal, excluding information representing slow variations of the signal;
C) determining a level of variation ($\Delta$<U>) of at least a portion of the signal (U) acquired in step A, the level of variation being representative of slow variations of the signal; and
**characterized in that** it further comprises the following step:
D) determining at least two pieces of information (R1, R2) characterizing the signal by applying at least two different functions that combine at least said vibration rating ($\sigma$) and said level of variation ($\Delta$<U>).

2. A method of characterizing a signal according to claim 1, wherein values of at least one indicator (IB1, IB2, IB3, IC1, IC2) are calculated, in particular by means of a predetermined table (E), from the vibration rating ($\sigma$) and/or the level of variation ($\Delta$<U>); and information characterizing the signal is determined in step D from said at least one indicator.

3. A method of characterizing a signal according to claim 1 or claim 2, wherein the signal (U) comprises calculated information.

4. A method of characterizing a signal according to any preceding claim, wherein the signal (U) comprises information obtained using at least one sensor.

5. A method of characterizing a signal according to any preceding claim, wherein step B comprises the following substeps:

B1) extracting a vibration content ($\hat{U}$) from the signal (U) acquired in step A; and
B2) calculating the vibration rating ($\sigma$) as being equal to a normalization of the vibration content ($\hat{U}$) obtained

in step B1.

6. A method of characterizing a signal according to any preceding claim, wherein the vibration rating ($\sigma$) and the level of variation ($\Delta$<U>) are determined for a common portion of the signal (U).

7. A method of characterizing a signal according to any preceding claim, wherein step B and/or step C is performed on the basis of values of the signal (U) received during a moving time window (F).

8. A method of characterizing a signal according to any preceding claim, wherein, in step D, the function combines the vibration rating ($\sigma$) and the level of variation ($\Delta$<U>) by using a threshold, an arithmetic operator, a Boolean operator, and/or a fuzzy logic operator.

9. A method of characterizing a signal according to any preceding claim, wherein said at least two pieces of information comprise a first piece of information designating a state of the signal and a second piece of information designating a confidence index to be given to said state of the signal.

10. A method of detecting failures in which a failure is detected on the basis of at least one piece of information (R1, R2) obtained by the method according to any preceding claim.

11. A computer program including instructions for executing steps of a method according to any one of claims 1 to 10 when said program is executed by a computer.

12. A computer readable data medium storing a computer program including instructions for executing steps of a method according to any one of claims 1 to 10.

13. A device for characterizing a signal (U), the device comprising:

A) means for acquiring a signal (U) and configured to be connected to equipment;
B) means for determining a vibration rating ($\sigma$), suitable for determining a vibration rating of at least a portion of the acquired signal, the vibration rating being a function solely of rapid fluctuations of the signal, excluding information representing slow variations of the signal;
C) means for determining a level of variation ($\Delta$<U>) suitable for determining a level of variation of at least a portion of the acquired signal, the level of variation being representative of slow variations of the signal; and
the device being **characterized in that** it further comprises:
D) means for determining at least two pieces of information characterizing the acquired signal and suitable for determining the pieces of information characterizing said signal by applying at least two different functions combining at least said vibration rating and said level of variation.

EP 3 066 534 B1

FIG.1

FIG.2

FIG.3

FIG.5

FIG.4